# EUROPÄISCHE PATENTANMELDUNG

(11) **EP 1 225 510 A2**
(43) Veröffentlichungstag der Anmeldung: **24.07.2002**
(21) Anmeldenummer: 02001233.2
(22) Anmeldetag: 17.01.2002
(51) Int. Cl.: G06F 11/22

(54) **Vorrichtung und Verfahren zum Prüfen eines Steuergerätes für ein Fahrzeug**

(30) Priorität: 20.01.2001 DE 10102642
(71) Anmelder: Bayerische Motoren Werke Aktiengesellschaft, 80809 München (DE)
(72) Erfinder: Auffhammer, Reinhard, 85221 Dachau (DE); Stangl, Gerhard, 85716 Unterschleissheim (DE)

(57) **Zusammenfassung**

Bei einer Vorrichtung und einem Verfahren zum Prüfen eines ersten, über einen Datenbus mit mindestens einem weiteren Datenbusteilnehmer (in Form eines zweiten Steuergeräts und/oder eines Sensors) verbundenen Steuergerätes, mit folgenden Merkmalen:
sind im ersten Steuergerät vorgesehen
a) eine Empfangseinrichtung für mindestens eine von dem weiteren Datenbusteilnehmer abgegebene Daten-Botschaft,
b) eine Speichereinrichtung für mehrere Daten-Botschaften
   ba) von Datenbusteilnehmern, die mit dem ersten Steuergerät im Verbund verwendbar sind, und
   bb) von anderen Datenbusteilnehmern, die mit dem ersten Steuergerät im Verbund nicht verwendbar sind, und ferner
c) eine Vergleichereinrichtung zum Vergleichen der mindestens einen Daten - Botschaft mit den in der Speichereinrichtung gespeicherten Daten -Botschaften.

Die Vergleichereinrichtung gibt ein Vergleichsergebnis aus.

## Beschreibung

Die vorliegende Erfindung betrifft eine Vorrichtung und ein Verfahren zum Prüfen eines Steuergerätes für ein Fahrzeug.

In Fahrzeugen werden verschiedene Steuergeräte eingesetzt, z. B. für die Antriebsschlupfregelung (i. f. ASC-Steuergerät genannt), die Brems-Blockierverhinderung (i.f. ABS-Steuergerät), die Fahrstabilisierung (i.f. DSC-Steuergerät) oder das Motormanagement (DME-Steuergerät). Aufgrund der modularen Bauweise sind diese Geräte zum Teil kompatibel; z.B. kann ein ASC-Steuergerät auch fälschlicherweise anstelle eines DSC-Steuergeräts eingebaut werden und dort eventuell auch Funktions-Teilumfänge realisieren. Dies gilt vor allem dann, wenn die Funktionsumfänge des einen Steuergeräts (z.B. ASC-Steuergeräts) in denen eines anderen Steuergeräts (hier: DSC-Steuergeräts) enthalten sind. Für den Fahrzeugbenutzer ist der Falschverbau dann in der Regel gar nicht oder erst dann erkennbar, wenn die eigentliche Fahrstabilisierung zum Einsatz kommen müsste.

Zur Vermeidung von Fehleinbauten dieser Steuergeräte werden nach dem Stand der Technik Steckerkodierungen verwendet oder im Montageablauf Abfragen, wie das Auslesen einer auf dem Steuergerät angebrachten Kennung durchgeführt. Es sind ferner Steuergeräte bekannt, die über eine Eigendiagnose verfügen und damit das Ausbleiben wichtiger Signale von Sensoren erkennen.

Die vorstehend genannten Steckerkodierungen sind konstruktiv sehr aufwendig. Sie erfordern unterschiedliche Kabelbaumstecker und damit Kabelbaumvarianten. Bei der Fertigung der Kabelbäume ist dadurch ein erhöhter Aufwand nötig. Sie erfordern ferner unterschiedliche Steuergerätegehäuse-Varianten. Dies führt zu hohen Werkzeugkosten. Auch werden von ein und demselben Zulieferer identische Steuergerätegehäuse-Varianten an verschiedene Fahrzeughersteller geliefert. Somit ist ein zumindest theoretisch ein Fehlverbau eines eigentlich für den Hersteller A bestimmten Steuergeräts in einem Fahrzeug des Herstellers B möglich und umgekehrt.

Die vorstehend beschriebene Abfragen im Montageablauf sind aufwendig und haben außerdem den Nachteil, daß zwar eine korrekte Werksauslieferung sichergestellt werden kann, es aber später beim Kundendienst bzw. bei Reparaturarbeiten zu Fehleinbauten kommen kann.

Auch die genannte Möglichkeit der Eigendiagnose ist nicht zuverlässig, da sich damit nicht alle möglichen Fehleinbauten zuverlässig feststellen lassen und das Ausbleiben eines Sensorsignals seine Ursache auch in einem Defekt des Sensors haben kann. Selbst wenn dieser Defekt ausgeschlossen werden kann, besteht die Gefahr, nicht zuverlässig den Falschverbau als die wahre Fehlerursache erkennen zu können.

Der Erfindung liegt die Aufgabe zugrunde, eine Vorrichtung und ein Verfahren bereitzustellen, mit der bzw. mit dem der Einbau von falschen Steuergeräten sicher vermieden werden kann.

Diese Aufgabe wird mit den Merkmalen der Patentansprüche gelöst.

Die Erfindung beruht auf dem Grundgedanken, daß innerhalb des Fahrzeuges der richtige Einbau eines Steuergerätes überwacht wird. Hierzu werden das Steuergerät und /oder weitere mit dem Steuergerät über einen Datenbus verbundene Steuergeräte so programmiert, dass das Steuergerät selbst den Falscheinbau erkennt und oder die weiteren Steuergeräte dies tun. Dies kann auf verschiedene, weiter unten im Detail angegebene Weise geschehen.

Voraussetzung für die verschiedenen Methoden ist eine Ausstattung des ersten Steuergerätes, mit erstens einer Empfangseinrichtung für mindestens eine von dem weiteren Datenbusteilnehmer abgegebene Daten-Botschaft, zweitens mit einer Speichereinrichtung für mehrere Daten-Botschaften, die sowohl von Datenbusteilnehmern stammen, die mit dem ersten Steuergerät im Verbund verwendbar sind, als auch von anderen (bei ordnungsgemäßen Verbau auch nicht vorhandenen) Datenbusteilnehmern, die mit dem ersten Steuergerät im Verbund nicht verwendbar sind, und drittens mit einer Vergleichereinrichtung zum Vergleichen der mindestens einen Daten -Botschaft mit den in der Speichereinrichtung gespeicherten Daten-Botschaften. Das Ergebnis des Vergleichs wird erfindungsgemäß zumindest dann ausgegeben, wenn tatsächlich ein Falschverbau vorliegt.

Bei einem fehlerhaften Einbau wird vorzugsweise eine Warnanzeige geliefert. Beispielsweise wird eine Warnlampe angesteuert.

Bei einer bevorzugten Ausführungsform der Erfindung werden betriebsgemäß vorhandene Daten-Botschaften eines ggf. vorhandenen Sensors zur Erkennung eines Falschverbaus eines Steuergeräts genutzt. Es sei beispielhaft ein Fahrzeug mit Fahrstabilisierung betrachtet. Das DSC-Steuergerät benötigt zu seiner ordnungsgemäßen Funktion als ein Eingangssignal das Ausgangssignal eines Lenkwinkelsensors. Fahrzeuge, die hingegen nur über eine Antriebsschlupfregelung verfügen, besitzen keinen Lenkwinkelsensor.

Ist fälschlicherweise ein ASC-Steuergerät anstelle eines DSC-Steuergeräts verbaut, erkennt das ASC-Steuergerät die Daten-Botschaft des Lenkwinkelsensors und steuert eine Warnlampe an. Hingegen wird in Fahrzeugen mit einem DSC-Steuergerät die Daten-Botschaft des Lenkwinkelsensors als richtig erkannt und keine Warnlampe gesetzt.

Bei einem Fahrzeug, das mit einer reinen Antriebsschlupfregelung ausgestattet ist, würde ein fälschlicherweise verbautes DSC-Steuergerät das Fehlen der Daten-Botschaft des Lenkwinkelsensors erkennen und eine Warnlampe setzen.

Gemäß weiterer bevorzugter Ausführungsformen der Erfindung werden spezielle Daten-Botschaften zur Überprüfung des richtigen Einbaus eines Steuergeräts eingesetzt. Dies kann durch das Steuergerät selbst vorgenommen werden. Es kann hierzu betriebsgemäß und ohne Stimulans durch einen anderen Datenbusteilnehmer eine Daten-Botschaft als Kennung aussenden oder aber auf ein Fragesignal eines anderen Datenbusteilnehmers hin. In jedem Fall ist der andere Datenbusteilnehmer in der Lage, an Hand der Kennung das erste Steuergerät eindeutig als richtig verbaut zu identifizieren oder an Hand der Kennung zu erkennen, dass es sich um ein falsch verbautes Steuergerät handelt. Im letzteren Fall kann das andere Steuergerät entweder das falsche Steuergerät identifizieren oder an Hand der nicht identifizieren Kennung den Falschverbau feststellen.

Die beschriebenen zusätzlichen Botschaften können zyklisch oder aber auch nur auf Anforderung versendet werden. Letzteres führt zu einer Verringerung der Buslast.

Bei dem Einsatz der erfindungsgemäßen Vorrichtung und/oder Systemeinrichtung sowie bei dem erfindungsgemäßen Verfahren oder bei der Verwendung zum Einbau in ein Fahrzeug kann eine kodierbare Liste und/oder eine kodierbare Prüfeineinrichtung verwendet werden. Dabei kann für ein sogenanntes Universal-Steuergerät über Softwarecodierung die bei richtiger Zuordnung von Steuergerät und Funktion dann vom Steuergerät auszugebende Daten-Botschaft festgelegt werden. Unter einem Universal-Steuergerät versteht man in diesem Fall ein Steuergerät, das fahrzeugmodellübergreifend zum Einsatz kommt (z.B. ein Motorsteuergerät) und bei dem die zu prüfenden/auszugebenden Daten-Botschaften bei der Fertigung am Band per Softwarecodierung für alle am Datenbus angeschlossenen Steuergeräte festgelegt werden.

Die Erfindung hat gegenüber dem Stand der Technik wesentliche Vorteile. Es sind keine aufwendigen Hardware-Kodierungen über Stecker und/oder Gehäuse erforderlich. Die Werkzeugkosten sind geringer, der Aufwand bei der Herstellung ist geringer und es sind keine zusätzlichen Kabelbaumvarianten für die Serie und den Ersatz erforderlich. Die Erfindung bietet eine vollständige Sicherheit, auch bei Systemen in modularer Bauweise und/oder bei herstellerübergreifenden Steuergeräten, insbesondere im Kundendienst. Der falsche Einbau von Steuergeräten ist sicher erkennbar.

## Patentansprüche

1. Vorrichtung zum Prüfen eines ersten, über einen Datenbus mit mindestens einem weiteren Datenbusteilnehmer (in Form eines zweiten Steuergeräts und/oder eines Sensors) verbundenen Steuergerätes,
mit im ersten Steuergerät vorgesehen
a) einer Empfangseinrichtung für mindestens eine von dem weiteren Datenbusteilnehmer abgegebene Daten-Botschaft,
b) Speichereinrichtung für mehrere Daten-Botschaften
ba) von Datenbusteilnehmern, die mit dem ersten Steuergerät im Verbund verwendbar sind, und
bb) von anderen Datenbusteilnehmern, die mit dem ersten Steuergerät im Verbund nicht verwendbar sind, und
c) einer Vergleichereinrichtung zum Vergleichen der mindestens einen Daten - Botschaft mit den in der Speichereinrichtung gespeicherten Daten -Botschaften und zum Ausgeben eines Vergleichsergebnisses.

2. Vorrichtung nach Anspruch 1, mit einer Warneinrichtung, die ein Warnsignal ausgibt, wenn die mindestens eine Daten -Botschaft nicht von einem Datenbusteilnehmer stammt, der mit dem ersten Steuergerät im Verbund verwendbar ist.

3. Betriebsverfahren für eine Vorrichtung nach Anspruch 1 oder 2, **dadurch gekennzeichnet, dass** der weitere Datenbusteilnehmer seine Daten-Botschaft betriebsmäßig abgibt.

4. Betriebsverfahren für eine Vorrichtung nach Anspruch 1 oder 2, **dadurch gekennzeichnet, dass** das erste Steuergerät selbsttätig seine Kennung abgibt.

5. Betriebsverfahren für eine Vorrichtung nach Anspruch 1 oder 2, **dadurch gekennzeichnet, dass** der weitere Datenbusteilnehmer seine Daten-Botschaft als Fragesignal an das erste Steuergerät abgibt und das erste Steuergerät daraufhin mit seiner Kennung antwortet.

6. Verfahren nach Anspruch 5, mit einer Zeitgebereinrichtung, die mit der Empfangseinrichtung und/oder der Sendeeinrichtung verbunden ist, **dadurch gekennzeichnet, dass** nach Senden des Fragesignals der Empfang eines Antwortsignals überwacht wird und bei Ausbleiben der Antwort innerhalb einer vorgegebenen Zeit ein Fehlerwarnsignal ausgeben wird.
